# EUROPÄISCHE PATENTSCHRIFT

(11) **EP 1 435 310 B1**
(45) Veröffentlichungstag und Bekanntmachung des Hinweises auf die Patenterteilung: **17.09.2008**
(21) Anmeldenummer: 03029727.9
(22) Anmeldetag: 23.12.2003
(51) Int. Cl.: B60P 7/08, B60P 7/06, F16G 11/12

(54) **Spannschloss zum Verzurren von Ladungen und Fahrzeugen**
Buckle for tying up of cargo on a vehicle
Boucle pour l'amarrage d'une charge sur une véhicule

(30) Priorität: 30.12.2002 DE 10261703
(43) Veröffentlichungstag der Anmeldung: 07.07.2004
(73) Patentinhaber: Freigeber, Jürgen, 42799 Leichlingen (DE)
(72) Erfinder: Freigeber, Jürgen, 42799 Leichlingen (DE)
(74) Vertreter: Sroka, Peter-Christian

(56) Entgegenhaltungen:
- DE-A1- 10 131 183
- DE-U1- 20 203 067
- GB-A- 2 041 441
- US-A- 4 737 056

## Beschreibung

Die Erfindung betrifft ein Spannschloss zum Verzurren von Ladungen auf Fahrzeugen, bestehend aus einem Rohr mit von beiden Rohrenden ausgehenden, gegenläufigen Innengewinden, zwei in die Innengewinde eingeschraubten Gewindespindeln, die an ihren freien Enden Befestigungselemente für Zurrmittel aufweisen, eine Sicherungseinrichtung zur Sicherung der Gewindespindeln gegen unbeabsichtigtes Drehen in dem Rohr, sowie einer Ratscheneinheit zum Verdrehen des Rohres.

Zum Verzurren von Ladungen werden insbesondere im Schwerlastbereich Zurrketten oder Zurrbänder eingesetzt, die das Transportgut auf dem Fahrzeug sichern sollen, damit die Ladung während des Transportes nicht verrutschen und sich nicht lösen kann

An den Enden der Zurrketten sind in der Regel Haken angebracht, die üblicherweise einerseits am Fahrzeug und andererseits am Transportgut befestigt werden. Zum Spannen der Kette wird ein auch als Ratschenlastspanner bezeichnetes Spannschloss mittels Verkürzungshaken oder -klauen zum Beispiel in die Kette eingehängt. Der Ratschenlastspanner hat zwei gegenläufige Gewindespindeln, die mittels der Ratscheneinheit entweder aufeinander zu oder voneinander weg bewegt werden können.

Bei einem in der GB 2 041 441 A beschriebenen Spannschloss dieser Art werden selbsthemmende links- und rechtsgängige Gewindespindeln verwendet. Eine derartige kraftschlüssig wirkende Sicherungs-einrichtung ist jedoch nicht in der Lage, während des Transporte auftretende maximale Belastungen aufzufangen, so dass weiterhin die Gefahr besteht, dass die Gewindespindeln sich während des Transportes unbeabsichtigt innerhalb des Gewinderohres verdrehen können, was in der Regel zum Lockern oder Lösen der Ladung führt.

Der Erfindung liegt die Aufgabe zugrunde, ein Spannschloss zu schaffen, mit der auch in Extremfällen ein derartiges unkontrolliertes Lösen des Spannschlosses verhindert wird.

Zur Lösung dieser Aufgabe ist das erfindungsgemäße Spannschloß gekennzeichnet durch eine auf dem Rohr verschiebbare Arretierungshülse, die gegen Drehung relativ zum Rohr gesichert ist und an einem Ende ein mit dem einen Befestigungselement zusammenwirkendes Arretierungsorgan aufweist, um nach dem Festzurren der Ladung das Befestigungselement und damit die zugeordnete Gewindespindel gegen unbeabsichtigtes Drehen relativ zum Rohr zu sichern.

Gemäß einer bevorzugten Ausführungsform der Erfindung kann das Rohr mit einem nach außen vorspringenden Kulissenstein versehen sein, der in eine axial verlaufende Führungsnut der Arretierungshülse eingreift.

Bei einer abgewndelten Ausführungsform ist vorgesehen, daß das Rohr an seiner Außenseite mit einer axial verlaufenden Führungsnut versehen ist, in die ein radial nach innen vorspringender Kulissenstein der Arretierungshülse eingreift.

Gemäß einer weiteren abgewandelten Ausführungsform kann das Rohr einen im Querschnitt unrunden, insbesondere polygonalen Außenmantel haben, wobei dann die Arretierungshülse eine im Querschnitt zum Außenmantel komplementäre Innenwand hat.

Zum Spannen und zum Lösen des Spannschlosses wird die Arretierungshülse auf dem Rohr nach innen verschoben, so daß das am äußeren Ende der Gewindespindel angebrachte Befestigungselement freigegeben wird, und damit das Rohr relativ zu den beiden Gewindespindeln verdreht werden kann, wodurch in dem einen Fall die Gewindespindeln nach innen in das Rohr eingezogen oder im anderen Fall nach außen aus dem Rohr herausgeschoben werden.

Der wesentliche Vorteil der Erfindung besteht darin, daß das Spannschloß bzw. der Ratschenlastspanner sich während der Fahrt durch auftretende Stöße oder Schläge nicht mehr unkontrolliert lockern oder lösen kann, so daß der vorgeschriebenen Ladungssicherheit beim Transport entsprochen wird.

Die Erfindung wird im folgenden an Hand der Zeichnungen näher beschrieben:
- Figur 1: zeigt eine Seitenansicht des erfindungsgemäßen Spannschlosses;
- Figur 2: zeigt in vergrößerter Darstellung eine Seitenansicht des einen Endes des Spannschlosses zur Verdeutlichung der Sicherung der einen Gewindespindel gegen Drehung relativ zu dem Rohr;
- Figur 3: zeigt eine Schnittansicht gemäß der Linie III-III in Figur 2;
- Figur 4: zeigt eine der Schnittansicht von Figur 3 entsprechende Schnittansicht einer abgewandelten Ausführungsform der Erfindung;
- Figur 5: zeigt eine der Figur 3 entsprechende Schnittansicht einer weiteren abgewandelten Ausführungsform der Erfindung.

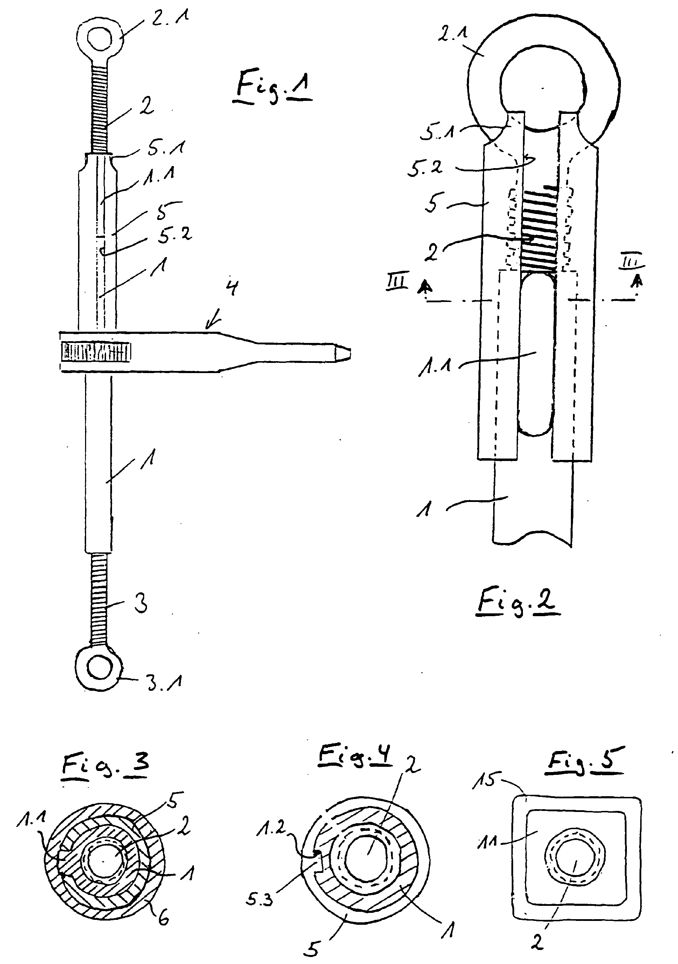

Figur 1 zeigt das erfindungsgemäße Spannschloß (Ratschenlastspanner) bestehend aus
- einem Rohr 1, das mit von beiden Rohrenden ausgehenden, gegenläufigen Innengewinden (nicht dargestellt) versehen ist,
- zwei in die Innengewinde eingeschraubten Gewindedspindeln 2, 3, die an ihren freien Enden Befestigungselemente 2.1, 3.1 für nicht dargestellte Zurrmittel aufweisen, sowie
- eine Ratscheneinheit 4 zum Verdrehen des Rohres 1 und
- eine auf dem Rohr 1 verschiebbare Arretierungshülse 5.

Das Rohr 1 ist an seiner Außenseite mit einem radial nach außen vorspringenden Kulissenstein 1.1 versehen, und die Arretierungshülse 5 weist eine axial verlaufende Führungsnut 5.2 auf, in die der Kulissenstein eingreift. Auf diese Weise ist die auf dem Rohr 1 verschiebbare Arretierungshülse 5 gegen Drehung relativ zum Rohr 1 gesichert. Die Arretierungshülse weist an ihrem Ende ein Arretierungsorgan 5.1, z.B. in Form eines Radialschlitzes, auf derart, daß gemäß der in Figur 2 dargestellten Arretierungs- bzw. Sicherungsstellung das Befestigungselement 2.1 in diesen Radialschlitz 5.1 eingreift, so daß eine Drehung des Rohres 1 relativ zur Gewindespindel 2 nicht mehr möglich ist. Die Arretierungshülse 5 wird, nachdem durch entsprechendes Betätigen der Ratscheneinheit 4 die Gewindespindeln 2; 3 zum Festzurren der Ladung in das Rohr eingeschraubt worden sind, in die in Figur 2 dargestellte Sicherungs- bzw. Arretierungsposition verschoben.

Gemäß Figur 3 kann die Arretierungshülse 5 von einem zusätzlichen Zylindermantel 6 umgeben sein.

Bei der in Figur 4 im Querschnitt dargestellten Anordnung ist das Rohr 1 an seiner Außenseite mit einer axial verlaufenden Führungsnut 1.2 versehen, in die ein an der Arretierungshülse 5 angebrachter, radial nach innen vorspringender Kulissenstein 5.3 eingreift.

Bei der Ausführungsform gemäß Figur 5 hat das mit dem Innengewinde versehene Rohr 11, welches dem Rohr 1 gemäß den Figuren 1 bis 4 entspricht, einen im Querschnitt unrunden, insbesondere polygonalen Außenmantel, der von einer relativ zu dem Rohr 11 axial verschiebbaren Arretierungshülse 15 umgeben ist, die an ihrer Innenseite einen zum Außenmantel des Rohres 11 komplementären Querschnitt hat. Auf diese Weise ist die Arretierungshülse 15 relativ zum Rohr 11 gegen Drehung gesichert. Die Arretierungshülse 5 weist an ihrem dem Befestigungselement 2.1 der Gewindespindel 2 zugewandten Ende ein im einzelnen nicht dargestelltes Arretierungsorgan auf, das dem Arretierungsorgan 5.1 der Ausführungsform gemäß den Figuren 1 und 2 entspricht.

## Patentansprüche

1. Spannschloss zum Verzurren von Ladungen auf Fahrzeugen, bestehend aus
- einem Rohr (1; 11) mit von beiden Rohrenden ausgehenden, gegenläufigen Innengewinden;
- zwei in die Innengewinde eingeschraubten Gewindespindeln (2, 3), die an ihren freien Enden Befestigungselemente (2.1; 3.1) für Zurrmittel aufweisen,
- einer Sicherungseinrichtung zur Sicherung der Gewindespindeln gegen unbeabsichtigtes Drehen in dem Rohr (1; 11), sowie
- einer Ratscheneinheit (4) zum Verdrehen des Rohres (1),
**dadurch gekennzeichnet, dass** als Sicherungseinrichtung eine entlang des Rohres (1; 11) verschiebbare Arretierungshülse (5; 15) vorgesehen ist, die gegen Drehung relativ zum Rohr (1; 11) gesichert ist und an einem Ende ein mit dem einen Befestigungselement (2.1) zusammenwirkendes Arretierungsorgan (5.1) aufweist.

2. Spannschloß nach Anspruch 1, **dadurch gekennzeichnet, daß** das Rohr (1) an seiner Außenseite mit einem radial nach außen vorspringenden Kulissenstein (1.1) versehen ist, und daß die Arretierungshülse (5) eine axial verlaufende Führungsnut (5.2) aufweist, in die der Kulissenstein (1.1) eingreift.

3. Spannschloß nach Anspruch 1, **dadurch gekennzeichnet, daß** das Rohr (1) an seiner Außenseite mit einer axial verlaufenden Führungsnut (1.2) versehen ist, und daß die Arretierungshülse (5) einen radial nach innen vorspringenden Kulissenstein (5.3) aufweist, der in die Führungsnut (1.2) eingreift.

4. Spannschluß nach Anspruch 1, **dadurch gekennzeichnet, daß** das Rohr (11) einen im Querschnitt unrunden, insbesondere polygonalen Außenmantel hat, und daß die Arretierungshülse (15) an ihrer Innenseite einen zum Außenmantel komplementären Querschnitt hat.

5. Spannschloß nach einem der Ansprüche 1 bis 4, **dadurch gekennzeichnet, daß** das Arretierungsorgan (5.1) mindestens eine seitlich gegen das Befestigungselement (2.1) anliegende Arretierungsfläche hat.

6. Spannschloß nach Anspruch 2, **dadurch gekennzeichnet, daß** die Führungsnut (5.2) die Form eines axial verlaufenden Längsschlitz hat, und daß die Arretierungshülse von einem Zylindermantel (6) umgeben ist.

## Claims

1. Turnbuckle for lashing loads on vehicles, consisting of
- a tube (1; 11) with opposing internal threads departing from both tube ends;
- two threaded spindles (2,3) screwed into the internal threads, which have fasteners (2.1; 3.1) for lashing means on their free ends,
- a locking device for securing the threaded spindles against accidental turning in the tube (1; 11) and also
- a ratchet unit (4) for turning the tube (1),
**characterised in that** a locking sleeve (5; 15), which can move along the tube (1; 11) is provided as a locking device, which is prevented from turning relative to the tube (1; 11) and has a locking mechanism (5.1) on one end that interacts with the one fastener (2.1).

2. Turnbuckle according to claim 1, **characterised in that** the tube (1) is provided on its outside with a sliding block (1.1) that projects radially outwards and that the locking sleeve (5) has an axially-directed guide groove (5.2), in which the sliding block (1.1) engages.

3. Turnbuckle according to claim 1, **characterised in that** the tube (1) is provided on its outside with an axially-directed guide groove (1.2) and that the locking sleeve (5) has a sliding block (5.3) that projects radially inwards that engages in the guide groove (1.2).

4. Turnbuckle according to claim 1, **characterised in that** the tube (11) has an outside casing with a non-circular, in particular polygonal cross-section and that the locking sleeve (15) has a cross-section on its inside that complements the outside casing.

5. Turnbuckle according to one of the claims 1 to 4, **characterised in that** the locking mechanism (5.1) has at least one locking surface abutting the fastener (2.1) at the side.

6. Turnbuckle according to claim 2, **characterised in that** the guide groove (5.2) has the form of an axially-directed longitudinal slot and that the locking sleeve is encased by a cylindrical casing (6).

## Revendications

1. Manchon de serrage pour arrimer des charges sur des véhicules, constitué de
- un tube (1 ; 11) ayant des taraudages opposés partant de deux extrémités,
- deux broches (2, 3) filetées vissées dans les taraudages et ayant à leurs extrémités libres des éléments (2.1 ; 3.1) de fixation d'un moyen d'arrimage,
- un dispositif de blocage pour empêcher les broches filetées de tourner inopinément dans le tube (1 ; 11), ainsi que
- une unité (4) de cliquet pour déformer le tube (1),
**caractérisé en ce qu'**il est prévu comme dispositif de blocage une douille (5 ; 15) d'arrêt, qui peut coulisser le long du tube (1 ; 11), qui est empêchée de tourner par rapport au tube (1 ; 11) et qui a à une extrémité un organe (5.1) d'arrêt coopérant avec un élément (2.1) de fixation.

2. Manchon de serrage suivant la revendication 1, **caractérisé en ce que** le tube (1) est muni sur sa face extérieure d'un coulisseau (1.1) en saillie radialement vers l'extérieur et **en ce que** la douille (5) d'arrêt a une rainure (5.2) de guidage, qui s'étend axialement et dans laquelle pénètre le coulisseau (1.1).

3. Manchon de serrage suivant la revendication 1, **caractérisé en ce que** le tube (1) est muni sur sa face extérieure d'une rainure (1.2) de guidage s'étendant axialement et **en ce que** la douille (5) d'arrêt a un coulisseau (5.3) qui fait saillie vers l'intérieur et qui pénètre dans la rainure (1.2) de guidage.

4. Manchon de serrage suivant la revendication 1, **caractérisé en ce que** le tube (11) a une surface latérale extérieure de section transversale qui n'est pas circulaire, en étant, notamment, polygonale et **en ce que** la douille (15) d'arrêt a sur son côté intérieur une section transversale complémentaire de la surface latérale extérieure.

5. Manchon de serrage suivant l'une des revendications 1 à 4, **caractérisé en ce que** l'organe (5.1) d'arrêt a au moins une surface d'arrêt s'appliquant latéralement sur l'élément (2.1) de fixation.

6. Manchon de serrage suivant la revendication 2, **caractérisé en ce que** la rainure (5.2) de guidage a la forme d'une fente longitudinale s'étendant axialement et **en ce que** la douille d'arrêt est entourée d'une surface (6) latérale cylindrique.
